(19) Europäisches Patentamt
European Patent Office
Office européen des brevets

(11) **EP 2 860 155 B1**

(12) **EUROPEAN PATENT SPECIFICATION**

(45) Date of publication and mention
of the grant of the patent:
**28.11.2018 Bulletin 2018/48**

(21) Application number: **13887594.3**

(22) Date of filing: **16.08.2013**

(51) Int Cl.:
*C01B 3/34* *(2006.01)*      *C07C 31/04* *(2006.01)*
*B01B 1/00* *(2006.01)*      *B01J 19/00* *(2006.01)*
*B01J 19/24* *(2006.01)*     *B01D 1/00* *(2006.01)*

(86) International application number:
**PCT/CN2013/081654**

(87) International publication number:
**WO 2015/018105 (12.02.2015 Gazette 2015/06)**

(54) **NEW TYPE OF WATER-CARBON RATIO CONTROL DEVICE**

NEUE VORRICHTUNG ZUR REGELUNG DES WASSER-KOHLENSTOFF-VERHÄLTNISSES

NOUVEAU TYPE DE DISPOSITIF DE COMMANDE DU RAPPORT EAU-CARBONE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2013 CN 201310335566**

(43) Date of publication of application:
**15.04.2015 Bulletin 2015/16**

(73) Proprietor: **Ally Hi-Tech Co. Ltd.
Chengdu, Sichuan 610000 (CN)**

(72) Inventors:
• **WANG, Yeqin
Chengdu
Sichuan 610000 (CN)**
• **ZHANG, Wei
Chengdu
Sichuan 610000 (CN)**

(74) Representative: **Sun, Yiming
HUASUN Patent- und Rechtsanwälte
Friedrichstraße 33
80801 München (DE)**

(56) References cited:
EP-A1- 1 361 193       EP-A2- 1 270 509
WO-A1-2006/120028      CN-A- 101 331 212
CN-A- 102 795 597      JP-A- S59 146 907
JP-A- S61 291 402      US-A- 4 345 915
US-A- 4 940 828        US-A1- 2002 031 458

## Description

### FIELD OF THE TECHNOLOGY

The present invention relates to a steam to carbon ratio control device.

### BACKGROUND

In the fields of using natural gas and steam as raw materials to produce hydrogen gas, methanol, syngas and synthetic ammonia, and in the various technologies, stringent control on the proportions of these two raw gases, i.e. the steam to carbon ratio (mainly the total number of carbon atoms and volume flow of steam), is required. As the main composition of natural gas is methane, the steam to carbon ratio in the above technologies refers to: the ratio of volume of methane to volume of steam under the same temperature, pressure and operation conditions.

EP 1270509 A2 discloses systems and methods for accurately calculating a steam-carbon ratio in a reformer or the like comprising a control valve regulating the amount of water entering the process side of a heat exchanger upstream of the reformer. A steam/process outlet directs steam from the heat exchanger to the reformer. A level control device operates the control valve to maintain the water at a constant level. A meter upstream of the heat exchanger measures the amount of water entering the heat exchanger. By maintaining a constant water level in the process portion of the heat exchanger, the reading on the meter equates to the amount of steam directed from the heat exchanger to the reformer or vaporizer. With this reading, the steam-carbon ratio at the reformer can be accurately counted. The process gas inlet may incorporate an elongated body extending at least partially through the process portion of the heat exchanger. Openings spaced apart along the length of the body distribute the process gas along the length of the heat exchanger. A plurality of dividers may be spaced apart along a width of the process portion of the heat exchanger. The dividers are positioned to receive the process gas as it rises from the process gas inlet, and to disperse the process gas along the width of the heat exchanger.

US 2002/031458 A1 discloses a reformer including three reforming reaction units including catalyst layers. A supply of crude fuel gas fed to the reformer successively passes through the catalyst layers to be subjected to reforming reactions and converted to a hydrogen-rich gaseous fuel. An air supply unit feeds a supply of the air to each catalyst layer. Oxidation reactions proceed in addition to the reforming reactions in the catalyst layer which receives the supply of the air. Heat produced by the oxidation reactions is utilized for the reforming reactions. Temperature sensors measure the internal temperatures of the catalyst layers. The amount of the air fed to each catalyst layer is regulated, based on the results of the measurement.

WO 2006/120028 A1 discloses a system for heat exchange in which process material flows through a heat exchanger comprising multiple heat transfer stages and the heating and or cooling power applied to each stage can be modified independently. The system comprises a unitary heat exchanger comprising a heat transfer surface comprising a plurality of elements or zones over which a process material can flow wherein each element or zone has independent means to set or control the level of heating or cooling within that zone.

EP1361193 A1 discloses a fuel cell power plant comprising a fuel reforming system including a vaporizer which vaporizes liquid fuel and supplies fuel vapor to a reformer. The vaporizer heats injected fuel so as to vaporize it by a heating element and supplies it to the reformer via a fuel vapor supply passage comprising a first valve. In a standby mode of the vaporizer when the first valve is closed, surplus fuel and heat energy in the standby state are recovered by providing a recovery passage which recovers fuel in the vicinity of the heating elements to the fuel tank without allowing it to flowing into the vapor supply passage.

US 4940828 discloses a method of controlling the dilution steam for steam cracking gaseous hydrocarbons which comprises: (a) circulating water upwardly through a tubular saturating zone and heating the water therein at a variably controlled rate by indirect heat exchange with a heating fluid; (b) injecting a gaseous hydrocarbon feed into a lower, flooded portion of the tubular saturating zone in concurrent flow with the circulating water; (c) recovering a two phase, equilibrium mixture comprised of water and water-saturated hydrocarbon feed from the tubular saturation zone; (d) introducing the two phase, equilibrium mixture to a separation zone having a static liquid pressure greater than that of the tubular saturation zone; (e) recovering a water stream from the separation zone and recirculating the recovered water stream to the tubular saturating zone; (f) recovering a mixed feed vapor stream of gaseous hydrocarbon fully saturated with water from the separation zone; (g) controlling the rate of indirect heat exchange in the tubular saturation zone by selecting a controlling temperature of the mixed feed vapor stream; and (h) introducing the mixed feed vapor stream to a steam cracking zone.

Steam to carbon ratio is generally calculated from the average carbon molecular numbers of raw materials in a device. When the raw materials change greatly, the lack of calibration leads to inaccuracy. The steam to carbon ratio is the most sensitive technical parameter in light oil reforming process. A rise in steam to carbon ratio can reduce coking of catalyst and effective surface area of conversion catalyst and decrease the reaction activity and efficiency, and decrease C2 or higher hydrocarbon content at the bed outlet, all of which are very beneficial to the reformation reaction. However, the rise in steam to carbon ratio correspondingly increases consumption of desalinated water and reformer energy, and increases load of the downstream cooling system. Therefore, a suitable steam to carbon ratio can only be determined according to a specific industrial device.

However, in the present technologies of applying natural gas for hydrogen, methanol, syngas and synthetic ammonia production, only a flow rate control system is provided on pipelines of the two raw gases for controlling steam to carbon ratio. Realization of such steam to carbon ratio control technology completely relies on the linkage between adjusting valves and flowmeters. Since response time of the adjusting valves towards signals produces different levels of delay or lagging and flowmeters for measuring flow rate inherently have measurement errors, accurate flow rate control is unable to be realized and the flow rate always fluctuates within a certain range. Such would unavoidably result in the inability of the adjusting valve to timely adjust the flow rate, and in turn fail to achieve accurate and stable control on steam to carbon ratio. In addition, different flowmeters have high demands towards installation positions.

## SUMMARY

The invention disclosed a steam to carbon ratio control device which can overcome shortcomings of the prior art. The invention can accurately control the proportion of natural gas to steam and stably control the flow rates of natural gas and steam.

The present invention relates to device for providing a mixed gas having a controlled steam-to-carbon ratio, the device for providing the mixed gas comprising an evaporation mixer (1) provided with a natural gas inlet (5), a desalinated water inlet (6), a mixed gas outlet (7), a heat source inlet (9), and a heat source outlet (10), - wherein said device for providing said mixed gas comprises a steam separator (2) for separation of liquid desalinated water and parts of the impurities produced during the transportation process, wherein said steam separator (2) is provided with a steam separating inlet (15) and a steam separating outlet (16) and wherein said mixed gas outlet (7) is connected to said inlet (15) of said steam separator (2) by a connecting pipeline provided with a temperature control device (3) and a pressure control device (4), wherein said heat source inlet (9) is connected with a first flow rate adjusting valve (11), wherein said first flow rate adjusting valve (11) and said temperature control device (3) are connected with an electronic control, characterized in that said heat source inlet (9) is connected with an end closer to the natural gas inlet (5) of the evaporation mixer (1), wherein said heat source outlet (10) is connected to an end closer to the mixed gas outlet (7) of the evaporation mixer (1), wherein said natural gas inlet (5) is connected with a second flow rate adjusting valve (12), wherein said second flow rate adjusting valve (12) and said pressure control device (4) are connected with an electronic control.

Further, a liquid level control device is provided on said evaporation mixer, and a third flow rate adjusting valve is provided on the desalinated water inlet, wherein the liquid level control device and the third flow rate adjusting valve are interconnected with electronic control.

Further, said liquid level control device is provided on an outside of the evaporation mixer.

Further, there is a plurality of inner pipes inside said evaporation mixer.

Further, a demister is provided inside said steam separator.

Comparing with the prior art, the beneficial effect of the present invention is that it can accurately control the proportion of natural gas to steam and stably control the flow rates of natural gas and steam.

## BRIEF DESCRIPTION OF THE DRAWINGS

In order to more clearly illustrate the prior art embodiment or aspect of embodiments of the present invention, embodiments will be described in the following figures for the embodiment of the need to use simple introduction, it is obvious, the following description of the drawings are some embodiments of the present invention, the person of ordinary skill in the art, in the premise without creative efforts can also obtain other drawings according to these drawings.

Figure 1 is a schematic diagram of an embodiment of the present invention.

Figure 2 is a schematic diagram illustrating the steam to carbon ratio control principle inside the evaporation mixer of the present invention.

In the figure, 1- Evaporation mixer; 2- Steam separator; 3- Temperature control device; 4- Pressure control device; 5- Natural gas inlet; 6- Desalinated water inlet; 7- Mixed gas outlet; 8- Inner pipe; 9- Heat source inlet; 10- Heat source outlet; 11- A first flow rate adjusting valve; 12- A second flow rate adjusting valve; 13- Liquid level control device; 14- A third flow rate adjusting valve; 15- Steam separating inlet; 16- Steam separating outlet; 17- Demister.

## DETAILED DESCRIPTION

In the following examples with specific technical solution of the present invention will be clearly and fully described, obviously, the described embodiments are only part of the embodiments of the present invention, but not all embodiments.

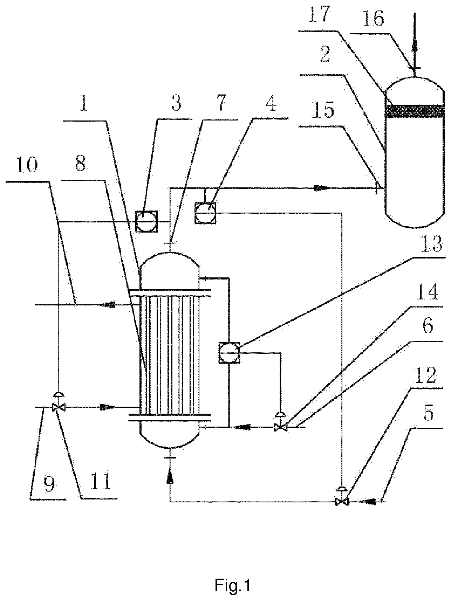

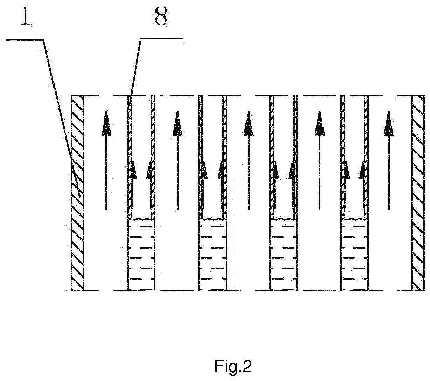

As shown in Figures 1 and 2, the steam to carbon ratio control device includes a heat source, and an evaporation mixer 1 and a steam separator 2 interconnected by pipelines, said heat source can be a saturated steam, process gas, intermediate air or reformed gas, in this embodiment, the heat source is a saturated steam, said connecting pipelines of said evaporation mixer 1 and steam separator 2 are provided with a temperature control device 3 and a pressure control device 4, the evaporation mixer 1 is provided with a natural gas inlet 5, a desalinated water inlet 6 and a mixed gas outlet 7. Inside the evaporation mixer 1 is provided with a plurality of inner pipes 8. Said temperature control device 3 and the pressure control device 4 both are located at one end near the mixed gas outlet 7, said heat source inlet of said heat source is connected at one end of the evaporation mixer 1 near the natural gas inlet 5, said heat source outlet 10 of the heat source is connected at one end of the evaporation mixer 1 near the mixed gas outlet 7, said heat source inlet is connected with a first flow rate adjusting valve 11, the first flow rate adjusting valve 11 and the temperature control device 3 are interconnected with electronic control, said natural gas inlet 5 is connected with a second flow rate adjusting valve 12, the second flow rate adjusting valve 12 and the pressure control device 4 are interconnected with electronic control; Said outside of the evaporation mixer 1 is provided with a liquid level control device 13. Said desalinated water inlet 6 is provided with a third flow rate adjusting valve 14, the third flow rate adjusting valve 14 and the liquid level control device 13 are interconnected with electronic control; said steam separator 2 is provided with a steam separating inlet 15 and a steam separating outlet 16. Inside said steam separator 2 is provided with a demister 17. In this embodiment, said temperature control device 3 is a temperature controller, said pressure control device 4 is a pressure adjusting valve, and said liquid level control device 13 is a level gauge.

The steam to carbon ratio control principle of the present invention is realized through controlling the partial pressure of the saturated steam and the total pressure of the mixed gas.

The saturated steam pressure, known as Ps, the mixed gas total pressure, known as $P_H$, and the natural gas pressure, known as $P_{NG}$, all three of which possess therebetween the below relationship:

$$P_H = P_S + P_{NG} \qquad\qquad \text{Formula (1)}$$

$$\text{i.e. } P_{NG} = P_H - P_S \qquad\qquad \text{Formula (2)}$$

Under a certain pressure, the saturated steam pressure and the temperature have a certain functional relationship. It can then be concluded that: when the temperature is constant, the saturated steam pressure is also constant.

As shown in Figure 1, the evaporation mixer 1 has an external heat source (such heat source can be a saturated steam, process gas, intermediate air or reformed gas that possesses a certain temperature) entering a shell of the evaporation mixer 1. On the pipeline to the heat source inlet is provided with the first flow rate adjusting valve 11. Adjustment between the first flow rate adjusting valve 11 and the temperature control device 3 on a pipeline to the evaporation mixer 1 outlet is made through electronic control signals. If the temperature at the outlet of the device is relatively high, then the flow rate of the heat source at the inlet is reduced to lower the internal temperature of the device. Such response time is very short. Control on the internal temperature of the device means indirect control on the saturated steam pressure inside the device, i.e. Ps.

The lateral side of the evaporation mixer is provided with the liquid level control device 13. Adjustment between the liquid level control device 13 and the third flow rate adjusting valve 14 on a pipeline to the desalinated water inlet 6 is made through electronic control signals. When the liquid level is too high or too low, the desalinated water flow rate is adjusted to adjust the liquid level, resulting in that the desalinated water level within the inner pipe 8 in the device always remain at a certain amount.

The mixed gas outlet 7 of the evaporation mixer 1 is provided with the pressure control device 4. Connection between the pressure control device 4 and the second flow rate adjusting valve 12 on a pipeline to the natural gas inlet is made through remote electronic control signals. By adjusting the opening of the second flow rate adjusting valve 12, the intake amount of the natural gas can be adjusted to control the pressure at the outlet of the device at a certain value, said pressure is $P_H$.

According to Formula (2), it is known that $P_{NG}$ has a constant value. Also, according to Dalton's law of Partial Pressure, the ratio of the volumes of two substances equals to the ratio of their pressures. In conclusion, the steam to carbon ratio of the raw gases (and the ratio of volume of natural gas and volume of steam gas) can be effectively and accurately controlled.

As shown in Figure 2, desalinated water enters the evaporation mixer 1 from the desalinated water inlet 6 at the bottom of the evaporation mixer 1. The natural gas enters the pipeline of the evaporation mixer 1 through the natural gas inlet 5 at the bottom of the evaporation mixer 1. Under the action of the bubbling to rise of natural gas in the inner pipe 8, the desalinated water in the inner pipe 8 rises in the form a film on the wall of the inner pipe 8, as shown by the arrows along the internal side of the inner pipe 8. The arrows along the external side of the inner pipe 8 show the flow direction of the heat source inside the shell of the evaporation mixer 1. Under the action of the external heat source inside the shell of the evaporation mixer 1 having a certain temperature, the desalinated water risen in the form of a film changes into saturated steam. The saturated steam and natural gas mix in the inner pipe 8 of the evaporator, leave from the mixed gas outlet 7 at the top of the evaporation mixer 1, and enter the steam separator 2 for separation of liquid desalinated water and parts of the impurities produced during the transportation process. Then, the mixed gas of saturated steam and natural gas with a certain steam to carbon ratio enters the next procedure.

**Claims**

1. A device for providing a mixed gas having a controlled steam-to-carbon ratio, the device for providing the mixed gas comprising an evaporation mixer (1) provided with a natural gas inlet (5), a desalinated water inlet (6), a mixed gas outlet (7), a heat source inlet (9), and a heat source outlet (10),

   - wherein said device for providing said mixed gas comprises a steam separator (2) for separation of liquid desalinated water and parts of the impurities produced during the transportation process, wherein said steam separator (2) is provided with a steam separating inlet (15) and a steam separating outlet (16) and wherein said mixed gas outlet (7) is connected to said inlet (15) of said steam separator (2) by a connecting pipeline provided with a temperature control device (3) and a pressure control device (4),
   - wherein said heat source inlet (9) is connected with a first flow rate adjusting valve (11), wherein said first flow rate adjusting valve (11) and said temperature control device (3) are connected with electronic control,

   **characterized in that**

   - said heat source inlet (9) is connected with an end closer to the natural gas inlet (5) of the evaporation mixer (1), wherein said heat source outlet (10) is connected to an end closer to the mixed gas outlet (7) of the evaporation mixer (1),
   - wherein said natural gas inlet (5) is connected with a second flow rate adjusting valve (12), wherein said second flow rate adjusting valve (12) and said pressure control device (4) are connected with electronic control.

2. The device for providing a mixed gas according to claim 1, further comprising:

   a liquid level control device (13) provided on the evaporation mixer (1); and
   a third flow rate adjusting valve (14) provided on the desalinated water inlet (6);
   wherein the liquid level control device (13) and the third flow rate adjusting valve (14) are interconnected with electronic control.

3. The device for providing a mixed gas according to claim 2, wherein the liquid level control device (13) is provided on an outside of the evaporation mixer (1).

4. The device for providing a mixed gas according to claim 3, further comprising a plurality of inner pipes (8) inside said evaporation mixer (1).

5. The device for providing a mixed gas according to claim 4, further comprising a demister (17) inside said steam separator (2).

**Patentansprüche**

1. Vorrichtung zum Bereitstellen eines Mischgases mit einem kontrollierten Dampf-Kohlenstoff-Verhältnis, wobei die Vorrichtung zum Bereitstellen des Mischgases einen Verdampfungsmischer (1) umfasst, der mit einem Erdgaseinlass (5), einem Einlass (6) für entsalztes Wasser, einem Mischgasauslass (7), einem Wärmequelleneinlass (9) und einem Wärmequellenauslass (10) versehen ist,

- wobei die Vorrichtung zum Bereitstellen des Mischgases einen Dampfabscheider (2) zum Trennen von flüssig entsalztem Wasser und Anteilen der während des Transportprozesses erzeugten Verunreinigungen umfasst, wobei der Dampfabscheider (2) mit einem Dampfabscheideeinlass (15) und einem Dampfabscheideauslass (16) versehen ist und wobei der Mischgasauslass (7) mit dem Einlass (15) des Dampfabscheiders (2) durch eine Verbindungsleitung verbunden ist, die mit einer Temperaturregelvorrichtung (3) und einer Druckregelvorrichtung (4) versehen ist,
- wobei der Wärmequelleneinlass (9) mit einem ersten Durchflusseinstellventil (11) verbunden ist, wobei das erste Durchflusseinstellventil (11) und die Temperaturregelvorrichtung (3) mit elektronischer Steuerung verbunden sind,

**dadurch gekennzeichnet, dass**

- der Wärmequelleneinlass (9) mit einem Ende verbunden ist, das näher am Erdgaseinlass (5) des Verdampfungsmischers (1) liegt, wobei der Wärmequellenauslass (10) mit einem Ende verbunden ist, das näher am Mischgasauslass (7) des Verdampfungsmischers (1) liegt,
- der Erdgaseinlass (5) mit einem zweiten Durchflusseinstellventil (12) verbunden ist, wobei das zweite Durchflusseinstellventil (12) und die Temperaturregelvorrichtung (4) mit elektronischer Steuerung verbunden sind.

2. Vorrichtung zum Bereitstellen eines Mischgases nach Anspruch 1, ferner umfassend:

eine Flüssigkeitsstand-Kontrollvorrichtung (13), die am Verdampfungsmischer (1) vorgesehen ist; und
ein drittes Durchflusseinstellventil (14), das am Einlass (6) für entsalztes Wasser vorgesehen ist;
wobei die Flüssigkeitsstand-Kontrollvorrichtung (13) und das dritte Durchflusseinstellventil (14) miteinander mit elektronischer Steuerung verbunden sind.

3. Vorrichtung zum Bereitstellen eines Mischgases nach Anspruch 2, wobei die Flüssigkeitsstand-Kontrollvorrichtung (13) an einer Außenseite des Verdampfungsmischers (1) vorgesehen ist.

4. Vorrichtung zum Bereitstellen eines Mischgases nach Anspruch 3, ferner umfassend eine Vielzahl von Innenrohren (8) innerhalb des Verdampfungsmischers (1).

5. Vorrichtung zum Bereitstellen eines Mischgases nach Anspruch 4, ferner umfassend einen Tropfenabscheider (17) innerhalb des Dampfabscheiders (2).

**Revendications**

1. Dispositif destiné à fournir un gaz mélangé comportant un rapport contrôlé de vapeur au carbone, le dispositif destiné à fournir le gaz mélangé comprenant un mélangeur d'évaporation (1) muni d'une entrée de gaz naturel (5), une entrée d'eau dessalée (6), une sortie de gaz mélangé (7), une entrée de source de chaleur (9) et une sortie de source de chaleur (10),

- dans lequel ledit dispositif destiné à fournir ledit gaz mélangé comprend un séparateur de vapeur (2) pour la séparation d'eau dessalée liquide et des parties des impuretés produites pendant le processus de transport, dans lequel ledit séparateur de vapeur (2) est équipé d'une entrée de séparation de vapeur (15) et d'une sortie de séparation de vapeur (16) et dans lequel ladite sortie de gaz mélangé (7) est reliée à ladite entrée (15) dudit séparateur de vapeur (2) au moyen d'un tuyau de raccordement équipé d'un dispositif de commande de température (3) et d'un dispositif de commande de pression (4),
- dans lequel ladite entrée de source de chaleur (9) est reliée à une première vanne de réglage de débit (11), dans lequel ladite première vanne de réglage de débit (11) et ledit dispositif de commande de température (3) sont reliés au moyen d'une commande électronique,

**caractérisé en ce que**

- ladite entrée de source de chaleur (9) est reliée à une extrémité située plus près de l'entrée de gaz naturel (5) du mélangeur d'évaporation (1), dans lequel ladite sortie de source de chaleur (10) est reliée à une extrémité située plus près de la sortie de gaz mélangé (7) du mélangeur d'évaporation (1),
- dans lequel ladite entrée de gaz naturel (5) est reliée à une seconde vanne de réglage de débit (12), dans lequel ladite seconde vanne de réglage de débit (12) et ledit dispositif de commande de pression (4) sont reliés au moyen d'une commande électronique.

2. Dispositif destiné à fournir un gaz mélangé selon la revendication 1, comprenant en outre :

un dispositif de commande de niveau de liquide (13) monté sur le mélangeur d'évaporation (1) ; et
une troisième vanne de réglage de débit (14) montée sur l'entrée d'eau dessalée (6) ;
dans lequel le dispositif de commande de niveau de liquide (13) et la troisième vanne de réglage de débit (14) sont interconnectés au moyen d'une commande électronique.

3. Dispositif destiné à fournir un gaz mélangé selon la revendication 2, dans lequel le dispositif de commande de niveau de liquide (13) est monté sur un extérieur du mélangeur d'évaporation (1).

4. Dispositif destiné à fournir un gaz mélangé selon la revendication 3, comprenant en outre une pluralité de tuyaux internes (8) situés à l'intérieur dudit mélangeur d'évaporation (1).

5. Dispositif destiné à fournir un gaz mélangé selon la revendication 4, comprenant en outre un dispositif de désembuage (17) situé à l'intérieur dudit séparateur de vapeur (2).

Fig.1

Fig.2

**REFERENCES CITED IN THE DESCRIPTION**

**Patent documents cited in the description**

- EP 1270509 A2
- US 2002031458 A1
- WO 2006120028 A1
- EP 1361193 A1
- US 4940828 A